# EUROPÄISCHE PATENTANMELDUNG

(11) **EP 0 741 160 A1**
(43) Veröffentlichungstag der Anmeldung: **06.11.1996**
(21) Anmeldenummer: 96106171.0
(22) Anmeldetag: 19.04.1996
(51) Int. Cl.: C08J 5/18, C08L 23/16

(54) **Hochtransparente Tiefziehfolie mit Siegelschicht auf Basis von Polypropylen und Linear low Density Polyethylen**

(30) Priorität: 02.05.1995 DE 19515969
(71) Anmelder: WOLFF WALSRODE AG, D-29655 Walsrode (DE)
(72) Erfinder: Gasse, Andreas Siegmar, Dr., 29664 Walsrode (DE); Klein, Rudi, 29664 Walsrode (DE)
(74) Vertreter: Braun, Rolf, Dr.

(57) **Zusammenfassung**

Die vorliegende Erfindung betrifft eine hochtransparente, sterilisationsfeste, gegebenenfalls polyamidhaltige Folie mit hoher mechanischer Festigkeit, die tiefziehbar und siegelbar ist, enthaltend mindestens eine Schicht Polymerblend aus Polypropylen (PP) und Linear Low Density Polyethylen (LLDPE), wobei der PP-Anteil im Polymerblend 81 bis 99,8 Gew.-% und der LLDPE-Anteil 0,2 bis 19 Gew.-% beträgt und das LLDPE eine Dichte zwischen 915 und 950 kg/m³, vorzugsweise 925 bis 950 kg/m³, aufweist.

## Beschreibung

Die vorliegende Erfindung betrifft eine insbesondere polyamidhaltige Tiefziehfolie mit einer Siegelschicht auf Basis von Polypropylen (PP) und Linear Low Density Polyethylen (LLDPE). Die Folie zeichnet sich durch hervorragende Transparenz aus sowie höherer mechanischer Festigkeit gegenüber Folien mit reinen PP- oder LLDPE-Siegelschichten. Die Folie findet u.a. Anwendung als sterilisationsfeste Verpackungsfolie.

An Folien für die Verpackungsanwendung werden hohe Ansprüche gestellt, was die mechanische Festigkeit und die Optik, sprich Transparenz angeht. Von daher ist man ständig bemüht ein Optimum an Transparenz zu erzielen. Die Transparenz von Verbundfolien auf Basis von Polyamid und Polyolefinen ist dann hoch, wenn die im allgemeinen trüberen Polyolefinschichten möglichst transparent ausgeführt werden können. Daher soll der Schwerpunkt auf die Transparenz der polyolefinischen Siegelschicht gelegt werden.

Nach dem Stand der Technik ist bekannt, daß die Verarbeitung von Polyelefinen nach dem Blasfolienprozeß zu relativ trüben Folien führt, wohingegen nach dem Flachfolienprozeß verarbeitetes Material zu glasklaren, transparenten Folien führt (Hagen H., Domininghaus H.: Polyethylen und andere Polyolefine, Verlag Brunke Garrels, Hamburg 1961, S. 175f). Dies gilt besonders auch für Polypropylen. Da Blasfolien aber andere attraktive Eigenschaften aufweisen, ist man bemüht Folienrezepturen zu erfinden, die die Transparenz verbessern, unabhängig vom Herstellverfahren.

Es wurde vorgeschlagen, dieses durch ein Polymerblend aus PP und LLDPE zu erreichen. Aus der Patentliteratur sind Folienrezepturen bekannt, die, um dieses Ziel zu erreichen, über 50 Gew-% LLDPE enthalten und damit vom Charakter her eher LLDPE-Folien als PP-Folien sind (JP 5 8217 534, EP 350 859, EP 423 387, US 5139855, EP 0 350 859).
Ferner wurde festgestellt, daß auch Gemische aus PP und LLDPE, die überwiegend PP enthalten, transparente Folien ergeben (JP 5 7159 832, JP 01152 144, WO 9214784). Allen Entwicklungen ist gemeinsam, daß zum Erreichen des Ziels 20 Gew-% oder mehr LLDPE erforderlich sind.

In EP-397-517-A wird auch ein Polymerblend aus PP und LLDPE beschrieben, welches 0,5 bis 20 Gew-% LLDPE enthalt. Nach dem Stand der Technik ist das Zumischen von LLDPE in PP in so geringen Mengen offensichtlich nur möglich, wenn das PP und das LLDPE sich möglichst ähnlich sind. Dies ist durch die Dichte charakterisiert. Die Dichte von PP liegt etwa bei 900 bis 910 kg/m³, die des LLDPE's, was als Mischungskomponente beschrieben wird, im Bereich von 860 bis 910 kg/m³. Ein LLDPE so geringer Dichte wird auch als VLDPE (Very Low Density Polyethylen) bezeichnet.

Es stellt sich daher die Aufgabe, eine polypropylenhaltige Folie bereitzustellen, die nach dem Blasfolien- oder Flachfilmprozeß hergestellt werden kann. Die entscheidende Eigenschaften der bereitzustellenden Folie ist die hohe Transparenz bei gleichzeitig hoher mechanischer Festigkeit. Die Folie kann sowohl eine Einschichtfolie sein als auch eine Mehrschichtfolie.

Übertaschenderweise gelang es eine hochtransparente, sterilisationsfeste, gegebenenfalls polyamidhaltige Folie mit hoher mechanischer Festigkeit, die tiefziehbar und siegelbar ist, enthaltend mindestens eine Schicht Polymerblend aus Polypropylen (PP) und Linear Low Density Polyethylen (LLDPE) bereitzustellen, die dadurch gekennzeichnet ist, daß der PP-Anteil im Polymerblend 81 bis 99,8 Gew-% und der LLDPE-Anteil 0,2 bis 19 Gew-% beträgt und das LLDPE eine Dichte zwischen 915 und 950 kg/m³, vorzugsweise 925 bis 940 kg/m³, aufweist.

Das PP ist ein Polypropylen-Homopolymer oder ein Polypropylen-Copolymer aus Propylen und einem C2 oder C4 bis C12 alpha-Olefin. Vorzugsweise ist das PP ein Ethylen/Propylen-Copolymer mit einem Ethylengehalt von 1 bis 9 Mol-%.

Das LLDPE ist ein Copolymer aus Ethylen und einem C3 bis C12 alpha-Olefin mit einem Melt Flow Index (MFI 190/2,16) von 0,1 bis 20 g/10min ist. Vorzugsweise kommen hier C4 und insbesondere C8 alpha-Olefine zum Einsatz.

In einer bevorzugten Ausführungsform enthält die Folie zusätzlich mindestens eine Polyamidschicht. Das Polyamid besteht aus den aliphatischen Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, aus einem aromatischen oder teilaromatischen Polyamid oder aus einer Mischung der genannten Polyamide besteht.

Darüber hinaus enthält die Folie in einer bevorzugten Ausführungsform mindestens eine Verbindungsschicht aus einem Klebstoffsystem (K) und/oder einem polymeren Haftvermittler (HV). Das Klebstoffsystem ist vorzugsweise ein 2-Komponenten Polyurethan-Klebstoffsystem. Der polymere Haftvermittler ist ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend, enthaltend mindestens einen der genannten Häftvermittler. Vorzugsweise ist der Haftvermittler ein anhydridmodifiziertes Ethylen/Propylen-Copolymer. Unter diesen wiederum sind maleinsäureanhydridgepfropfte Ethylen/Propylen-Copolymere zu bevorzugen.

Die Folie kann z.B. den Aufbau Polyamid/Verbindungsschicht/Polymerblend oder Polyamid/Verbindungsschicht/Polyamid/Verbindungsschicht/Polymerblend aufweisen. Setzt man das beschriebene Polymerblend als Siegelschicht ein, sind im einzelnen Folienaufbauten wie folgt denkbar:
1. PA / HV / PA / HV / Siegelschicht
2. PA / HV / Siegelschicht
3. PA / EVOH / PA / K / Siegelschicht
4. PA / K / Siegelschicht
5. PA / HV / PA / HV / PP / Siegelschicht
6. PA / HV / PP / Siegelschicht
7. PA / HV / PA / K / PP / Siegelschicht
8. PA / HV / PA / K / Siegelschicht u.s.w.

Die Gesamtdicke der Folie, sofern es sich nicht um eine einschichtige Folie handelt, liegt im Bereich 15 bis 400 µm, vorzugsweise 50 bis 300 µm. Wird das beschriebene Polymerblend als Siegelschichtmaterial eingesetzt, sollte der Anteil der Siegelschicht an der Gesamtfoliendicke 5 bis 90%, vorzugsweise 10 bis 80%, betragen.

Grundsätzlich kann die Folie zusätzlich übliche Zusatz- und Hilfsstoffe enthalten. Zur Variation der Gleiteigenschaften der Folie kann mindestens eine Schicht Gleitmittel- und/oder Antiblockmittel enthalten. Antiblockmittel sollten dabei vorzugsweise in die Folienaußenschichtengegeben werden, Gleitmittel auch in innenliegende Schichten.

Die Folie ist für die Bedruckung geeignet. Es kann mindestens eine Schicht eingefärbt oder bedruckt sein.

Die Folie ist besonders für Verpackungsanwendung, besonders für die Verpackung von Lebensmitteln geeignet. Die Folie kann dabei sowohl für Heißabfüllungen als auch für die Erhitzung von Füllgut in der Folie bis hin zur Sterilisation gut eingesetzt werden. Die Folie ist geeignet für die Verpackung von Fleisch- und Wurstprodukten, Milchprodukten, Fisch- und Räucherwaren, Fertiggerichten, Brot- und Backwaren und medizinisch-technischen Geräten.

Überraschenderweise ist es durch die erfindungsgemäße Zusammensetztung der Folie gelungen die besonderen Anforderungen an Transparenz und mechanischer Festigkeit zu erfüllen. Nach dem Stand der Technik war nicht zu erwarten, daß ein Gemisch aus PP und LLDPE, wobei der LLDPE-Anteil 0,2 bis 19 Gew-% beträgt und das LLDPE in seiner Dichte deutlich höher als des PP liegt, extrudierbar und zu einer Folie zu verarbeiten ist. Überraschenderweise wurde festgestellt, daß ein Polymerblend der beschriebenen Zusammensetzung zu einer tranparenteren Folie zu verarbeiten ist als die im Polymerblend enthaltenen Einzelkomponenten. Ferner überraschte, daß auch die mechanische Festigkeit der gesamten Folie höher ist, als die der Einzelkomponenten.

Für die Herstellung der Folie kommen Coextrusion (Blasfolie oder Flachfilm) oder auch die Einzelfertigung der benötigten Schichten in Frage, die dann anschließend miteinander kaschiert werden. Auch kombinierte Verfahren sind denkbar.

Es kommen bekannte, nach dem Stand der Technik übliche Anlagenkonzepte zur Anwendung, wobei im Fall der Blasfoliencoextrusion der Fertigungsvorgang dadurch gekennzeichnet ist, daß die Schmelze zum Schlauch geformt wird, welcher aufgeblasen, gekühlt und am anderen nun kalt gewordenem Ende von Quetschwalzen flachgelegt und geschlossen gehalten wird und anschließend die Folie aufgewickelt wird. Im Fall der Flachfoliencoextrusion werden sogenannte Chill-Roll-Anlagen eingesetzt, die als besonderes Merkmal große Kühlwalzen aufweisen, die den aus dem Werkzeug austretenden Schmelzefilm aufnehmen.

Zur Beurteilung der Erfindung wurden erfindungsgemäß hergestellt Folie und eine 70 µm dicke Polyamidfolie (PA) zu einer Verbundfolie kaschiert und die Trübung als optischer Wert sowie mechanische Eigenschaften dieses Folienverbundes meßtechnisch ermittelt.

Die Messung der Trübung erfolgt in % Trübung entsprechend % Haze nach der ASTM-Prüfnorm D 1003-61m, Procedere A, nach Eichung des Meßgerätes mit Trübungsnormalen zwischen 0,3 und 34 % Trübung. Es wurde ein Hazemeter der Fa. Byk-Gardner mit Ulbricht-Kugel, das in einem Raumwinkel von 8 bis 160° eine integrierte Messung der Diffusen Lichtdurchlässigkeiten gestattet, gemessen.

Parallel zur Messung der Trübung wurden der Sekantenmodul, die 5%-Dehnspannung und die Streckspannung als Maße für die mechanische Festigkeit des Folienverbundes mittels Zugversuch ermittelt. Der Zugversuch wurde nach DIN 53 455 durchgeführt. In diesem Zusammenhang ist der Sekantenmodul die Steigung der Kraft-Dehnungskurve zwischen 0,05 und 0,25% Dehnung bezogen auf den Einspannquerschnitt, die 5%-Dehnspannung die Spannung bei 5% Dehnung und die Streckspannung die Zugspannung bei der die Steigung der Kraft-Längenänderungs-Kurve zum ersten mal gleich null wird (siehe Definition in DIN 53 455). Es wurden 15 mm breite Proben bei 23°C und 50% relativer Luftfeuchte untersucht. Die Prüfgeschwindigkeit betrug 100 mm/min.

Der Gegenstand der Erfindung soll an Hand folgender Beispiele erklärt werden.

### A. Beispiel 1:

### Mehrschichtige Folie mit dem Aufbau

**PA / K / (97%PP1 + 3%LLDPE)**
70 / - / 65 µm

Im (PP+LLDPE)-Blend sind 3 Gew-% LLDPE enthalten. Die Folie aus dem Polymerblend aus PP1 und LLDPE wurde mittels Blasfolienprozess hergestellt und anschließend mittels lösungsmittelhaltigen Klebstoffsystems K (Klebstoffauftragsmenge: 3,5 g/m²) zusammen mit der PA-Folie zum Folieverbund kaschiert. Als PA wurde Polyamid 6 der Dichte 1140 kg/m³ mit dem Kristallitschmelzpunkt 219°C und einer relativen Lösungsviscosität von 3,8 (PA-Konzentration 1%, Temperatur 25°C, gemessen in m-Kresol), als PP1 ein Ethylen/Propylen-Copolymer der Dichte 900 kg/m³ mit dem Kristallitschmelzpunkt 149°C und einem Schinelzindex (MFI 230/2,16) von 6 g/10min und als LLDPE ein Copolymer aus Ethylen und Okten der Dichte 935 kg/m³, dem Kristallitschmelzpunkt 126°C und einem Schmelzindex (MFI 190/2,16) von 4,4 g/10min eingesetzt.

### B. Beispiel 2:

### Mehrschichtige Folie mit dem Aufbau

**PA / K / (94%PP1 + 6%LLDPE)**
70 / - / 65 µm

Folienherstellung und verwendete Polymere wie in Beispiel 1 beschrieben.

### C. Beispiel 3:

### Mehrschichtige Folie mit dem Aufbau

**PA / K / (88%PP1 + 12%LLDPE)**
70/ - / 65 µm

Folienherstellung und verwendete Polymere wie in Beispiel 1 beschrieben.

### D. Beispiel 4:

### Mehrschichtige Folie mit dem Aufbau

**PA / K / (90%PP2 + 10%LLDPE**)
70 / - / 50 µm

Die Herstellung der Folie erfolgte wie in Beispiel 1 beschrieben. Polyamid PA, Klebstoffsystem K und LLDPE sind identisch mit denen aus in Beispiel 1. Als PP2 wurde ein Ethylen/Propylen-Copolymer der Dichte 900 kg/m³ mit dem Kristallitschmelzpunkt 138°C und einem Schmelzindex (MFI 230/2,16) von 5 g/10 min.

### E. Vergleichsbeispiel 1:

### Mehrschichtige Folie mit dem Aufbau

**PA / K /PP1**
70 / - / 65 µm

Folienherstellung und verwendete Polymere wie in Beispiel 1 beschrieben.

### F. Vergleichsbeispiel 2:

### Mehrschichtige Folie mit dem Aufbau

**PA / K / (76%PP1 + 24%LLDPE)**
70 / - / 65 µm

Folienherstellung und verwendete Polymere wie in Beispiel 1 beschrieben.

### G. Vergleichsbeispiel 3:

### Mehrschichtige Folie mit dem Aufbau

**PA / K / LLDPE**
70 / - / 65 µm

Folienherstellung und verwendete Polymere wie in Beispiel 1 beschrieben.

### H. Vergleichsbeispiel 4:

### Mehrschichtige Folie mit dem Aufbau

**PA / K / PP2**
70 / - / 50 µm

Folienherstellung und verwendete Polymere wie in Beispiel 4 beschrieben.

### I. Vergleichsbeispiel 5:

### Mehrschichtige Folie mit dem Aufbau

**PA / K / (90%PP2 + 10%VLDPE)**
70 / - / 50 µm

Folienherstellung, Polyamid PA, Klebstoffsystem K und Polypropylen PP2 wie in Beispiel 4 beschrieben. Das verwendete VLDPE hatte eine Dichte von 904 kg/m³, einen Kristallitschmelzpunkt von 99°C und einem Schmelzindex (MFI 190/2,16) von 1,4 g/10min.

Für die beschriebenen Folien A, B, C, D, E, F, G, H, und I sind die gemessenen Werte zur Folienoptik und die mechanischen Eigenschaften, wie sie sich aus dem Zugversuch ergeben, in den folgenden Tabellen 1 und 2 dargestellt. Die Messung erfolgte nach den zuvor beschriebenen Verfahren.

**Tabelle 1**

| Folienoptik | | | | | |
|---|---|---|---|---|---|
| | **PP** | **PE** | **Dichte des PE's [kg/m**^{**3**}**]** | **LLDPE- Anteil der Siegelschicht [Gew-%]** | **Trübung [ % ]** |
| E. Vergleich 1 | PP1 | - | - | 0 | 18 |
| A. Beispiel 1 | PP1 | LLDPE | 935 | 3 | 13 |
| B. Beispiel 2 | PP1 | LLDPE | 935 | 6 | 12 |
| C. Beispiel 3 | PP1 | LLDPE | 935 | 12 | 12 |
| F. Vergleich 2 | PP1 | LLDPE | 935 | 24 | 16 |
| G. Vergleich 3 | - | LLDPE | 935 | 100 | 23 |
| H. Vergleich 4 | PP2 | - | - | 0 | 23 |
| I. Vergleich 5 | PP2 | VLDPE | 904 | 10 | 23 |
| D. Beispiel 4 | PP2 | LLDPE | 935 | 10 | 13 |

**Tabelle 2**

| Mechanische Eigenschaften | | | | |
|---|---|---|---|---|
| | **LLDPE-Anteil der Siegelschicht [Gew-%]** | **Sekantenmodul [N/mm**^{**2**}**]** | **5%- Dehnspannung [N/mm**^{**2**}**]** | **Streckgrenze [N/mm**^{**2**}**]** |
| E Vergleich 1 | 0 | 744 | 19,4 | 22,8 |
| A. Beispiel 1 | 3 | 750 | 20,4 | 25,2 |
| B. Beispiel 2 | 6 | 776 | 20,4 | 24,8 |
| C. Beispiel 3 | 12 | 754 | 19,9 | 23,9 |
| F. Vergleich 2 | 24 | 736 | 19,2 | 22,6 |
| G. Vergleich 3 | 100 | 560 | 15,1 | 18,7 |

Betrachtet man zunächst Tabelle 1, so ist erkennbar, daß die Folienverbunde, die Polymerblends aus LLDPE und PP1 mit 3, 6 und 12 Gew-% LLDPE in der Siegelschicht (Beispiele 1, 2 und 3) enthalten, deutlich weniger trübe sind als die, die die Einzelkomponenten PP1 ( Vergleichsbeispiel 1) und LLDPE ( Vergleichsbeispiel 3) enthalten und ebenfalls deutlich weniger trübe als die Version, die 24 Gew-% LLDPE in der Siegelschicht ( Vergleichsbeispiel 2) enthält.

Tabelle 1 zeigt ferner den Vergleich eines LLDPE's mit einem VLDPE. Ausgehend von einem anderen Ethylen/Propylen-Copolymer PP2 in der Siegelschicht (Vergleichsbeispiel 4) erhält man eine Trübung von 23%. Mischt man dem PP2 10Gew.-% eines VLDPE's der Dichte 904 kg/m³ zu (Vergleichsbeispiel 5), erhält man im Vergleich zur reinen PP2-Siegelschicht den gleichen Trübungswert von 23%. Verwendet man hingegen ein LLDPE mit einer Dichte im erfindungsgemäßen Bereich (Beispiel 4), erzielt man eine deutliche Verringerung des Trübungswertes.

Tabelle 2 zeigt, daß dieses analog auch für die mechanischen Kennwerte, wie sie sich aus dem Zugversuch ergeben, gilt. Die erfindungsgemäß hergestellten Folien mit 3, 6 und 12 Gew-% LLDPE in der Siegelschicht (Beispiele 1, 2 und 3) weisen eine höhere mechanische Festigkeit auf wie die gemessenen Sekantenmoduli, 5%-Dehnspannungen und Streckgrenzen erkennen lassen, wohingegen niedrigere Werte erreicht werden, wenn die Siegelschicht zuviel LLDPE (Vergleichsbeispiel 2 und 3) oder nur PP enthält (Vergleichsbeispiel 1).

## Patentansprüche

1. Hochtransparente, sterilisationsfeste, gegebenenfalls polyamidhaltige Folie mit hoher mechanischer Festigkeit, die tiefziehbar und siegelbar ist, enthaltend mindestens eine Schicht Polymerblend aus Polypropylen (PP) und Linear Low Density Polyethylen (LLDPE), dadurch gekennzeichnet, daß der PP-Anteil im Polymerblend 81 bis 99,8 Gew-% und der LLDPE-Anteil 0,2 bis 19 Gew-% beträgt und das LLDPE eine Dichte zwischen 915 und 950 kg/m³, vorzugsweise 925 bis 940 kg/m³, aufweist.

2. Folie nach Anspruch 1, dadurch gekennzeichnet, daß das PP ein Polypropylen-Homopolymer oder ein Polypropylen-Copolymer aus Propylen und einem C2 oder C4 bis C12 alpha-Olefin ist.

3. Folie nach einem der Ansprüche 1 bis 2, dadurch gekennzeichnet, daß das PP ein Ethylen/Propylen-Copolymer ist mit einem Ethylengehalt von 1 bis 9 Mol-% ist.

4. Folie nach einem der Ansprüche 1 bis 3, dadurch gekennzeichnet, daß das LLDPE ein Copolymer aus Ethylen und einem C3 bis C12 alpha-Olefin mit einem Melt Flow Index (MFI 190/2,16) von 0,1 bis 20 g/10min ist.

5. Folie nach einem der Ansprüche 1 bis 4, dadurch gekennzeichnet, daß das LLDPE ein Copolymer aus Ethylen und einem C4 oder C8 alpha-Olefin ist.

6. Folie nach einem der Ansprüche 1 bis 5, dadurch gekennzeichnet, daß die Folie mindestens eine Polyamidschicht enthält.

7. Folie nach einem der Ansprüche 1 bis 6, dadurch gekennzeichnet, daß das Polyamid aus den aliphatischen Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, aus einem aromatischen oder teilaromatischem Polyamid oder aus einer Mischung der genannten Polyamide besteht.

8. Folie nach einem der Ansprüche 1 bis 7, dadurch gekennzeichnet, daß die Folie mindestens eine Verbindungsschicht aus einem Klebstoffsystem und/oder einem polymeren Haftvermittler enthält.

9. Folie nach einem der Ansprüche 1 bis 8, dadurch gekennzeichnet, daß das Klebstoffsystem ein 2-Komponenten Polyurethan-Klebstoffsystem ist.

10. Folie nach einem der Ansprüche 1 bis 9, dadurch gekennzeichnet, daß der polymere Haftvermittler ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)acrylat, ein anhydridmodifiziertes Ethylenvinylacetat, ein säure-/acrylatmodifiziertes Ethylenvinylacetat oder ein Polymerblend ist, enthaltend mindestens einen der in diesem Anspruch genannten Haftvermittler.

11. Folie nach einem der Ansprüche 1 bis 10, dadurch gekennzeichnet, daß der Haftvermittler ein anhydridmodifiziertes Ethylen/Propylen-Copolymer ist.

12. Folie nach einem der Ansprüche 1 bis 11, dadurch gekennzeichnet, daß der Haftvermittler (HV) ein maleinsäureanhydridgepfropftes Ethylen/Propylen-Copolymer ist.

13. Folie nach einem der Ansprüche 1 bis 12, dadurch gekennzeichnet, daß die Folie den Aufbau Polyamid/Verbindungsschicht/Polymerblend oder Polyamid/Verbindungsschicht/Polyamid/Verbindungsschicht/Polymerblend aufweist.

14. Folie nach einem der Ansprüche 1 bis 13, dadurch gekennzeichnet, daß die Gesamtdicke der Folie 15 bis 400 µm beträgt.

15. Verwendung einer Folie gemäß einem der Ansprüche 1 bis 14 als Verpackungsfolie.

16. Verwendung einer Folie gemäß Anspruch 15 als Verpackungsfolie für Lebensmittel.
